# EUROPEAN PATENT APPLICATION

(11) **EP 4 016 496 A1**
(43) Date of publication of application: **22.06.2022**
(21) Application number: 21794297.8
(22) Date of filing: 21.06.2021
(51) Int. Cl.: G08G 1/14, G06K 9/00

(54) **PARKING SPACE DETECTION METHOD AND APPARATUS, VEHICLE AND READABLE MEDIUM**

(30) Priority: 20.10.2020 CN 202011128953
(71) Applicant: Guangzhou Xiaopeng Autopilot Technology Co., Ltd., Guangzhou, Guangdong 510725 (CN)
(72) Inventor: ZHANG, Hong, Guangzhou, Guangdong 510725 (CN); HE, Ruotao, Guangzhou, Guangdong 510725 (CN); OUYANG, Zhan, Guangzhou, Guangdong 510725 (CN); QIN, Han, Guangzhou, Guangdong 510725 (CN); JIANG, Shaofeng, Guangzhou, Guangdong 510725 (CN)
(74) Representative: Treeby, Philip David William
(86) International application number: PCT/CN2021/101349
(87) International publication number: WO 2022/083150

(57) **Abstract**

The present disclosure provides a parking space detection method, a parking space detection apparatus, a vehicle and a readable medium. The method includes: acquiring ambient images on both sides of a vehicle; identifying an unoccupied parking space based on the ambient images; acquiring accessible space information for the unoccupied parking space; determining, based on the accessible space information, whether there is a deployed parking lock in the unoccupied parking space; and if not, determining the unoccupied parking space as an available parking space. The disadvantage that a collapsed parking lock is determined as an obstacle when detected by an ultrasonic radar is avoided by detecting whether a parking lock is deployed, such that a parking space with a collapsed parking lock can be determined as an available parking space, thereby improving the efficiency of automatic parking.

## Description

The present application claims the priority to Chinese Patent Application No. 202011128953.8 filed with China National Intellectual Property Administration on 20 October 2020, and entitled "PARKING SPACE DETECTION METHOD, PARKING SPACE DETECTION APPARATUS, VEHICLE AND READABLE MEDIUM", which is herein incorporated by reference in its entirety.

### Field of Invention

The present invention relates to the field of parking space detection, and in particular to a parking space detection method, a parking space detection apparatus, a vehicle and a readable medium.

### Background

At present, an autonomous vehicle needs to rely on a vehicle-mounted ultrasonic radar to detect an obstacle in a parking space, and determine whether there is an obstacle in the parking space after receiving an ultrasonic radar echo during automatic parking. The vehicle can be parked into the parking space through automatic parking only when determining that there is no obstacle in the parking space.

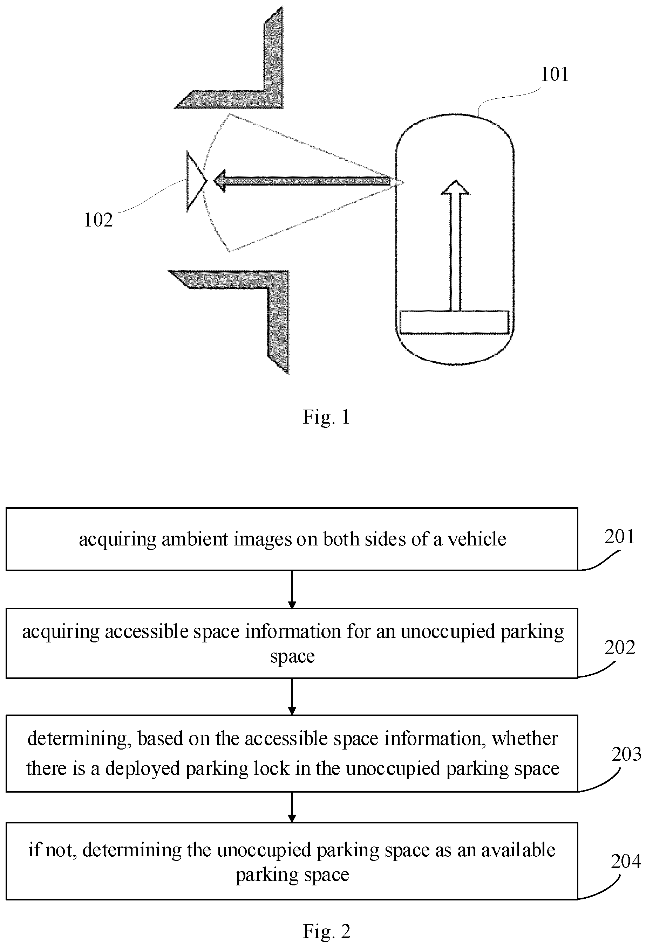

However, the ultrasonic radar cannot detect the status of a parking lock, i.e., the vehicle will receive an ultrasonic radar echo reflected from the parking lock no matter whether the parking lock is deployed or collapsed. As shown in Fig. 1, an ultrasonic radar loaded onto a vehicle 101 can only detect the presence of a parking lock 102, but cannot detect that the parking lock 102 is collapsed. Consequently, the ultrasonic radar will determine the parking lock as an obstacle even if the parking lock is collapsed, and thus determine an available parking space as an unavailable parking space, thereby greatly reducing the efficiency of automatic parking.

### Summary of Invention

In view of this, the present disclosure provides a parking space detection method, a parking space detection apparatus, a vehicle and a readable medium.

The present disclosure provides a parking space detection method, including:
acquiring ambient images on both sides of a vehicle;
identifying an unoccupied parking space based on the ambient images;
acquiring accessible space information for the unoccupied parking space;
determining, based on the accessible space information, whether there is a deployed parking lock in the unoccupied parking space; and
if not, determining the unoccupied parking space as an available parking space.

In some implementations, the step of identifying an unoccupied parking space based on the ambient images includes:
detecting parking space boundaries and parking space corner points in the ambient images; and
determining a plurality of unoccupied parking spaces in the ambient images based on the parking space boundaries and the parking space corner points.

In some implementations, after the step of determining a plurality of unoccupied parking spaces in the ambient images based on the parking space boundaries and the parking space corner points, the method further includes:
dividing the unoccupied parking space into a plurality of detection areas; and
determining an area in which a parking lock is located among the plurality of detection areas as a target area.

In some implementations, the accessible space information includes accessible space coordinate points, and the step of determining, based on the accessible space information, whether there is a deployed parking lock in the unoccupied parking space includes:
determining, based on coordinates of the accessible space coordinate points, the number of accessible space coordinate points falling into the target area;
determining whether the number exceeds a preset threshold;
if so, determining that there is a deployed parking lock in the unoccupied parking space;
if not, determining, based on the coordinates of the accessible space coordinate points, whether the accessible space coordinate points fall behind the unoccupied parking space and are located in an area outside the parking space boundaries; and
determining that there is no deployed parking lock in the unoccupied parking space if the accessible space coordinate points fall behind the unoccupied parking space and are located in the area outside the parking space boundaries.

In some implementations, the step of determining, based on coordinates of the accessible space coordinate points, the number of accessible space coordinate points falling into the target area includes:
determining a coordinate range of the target area;
inspecting the accessible space coordinate points;
determining whether the coordinates of the accessible space coordinate points fall within the coordinate range;
if so, determining the accessible space coordinate points falling into the target area as target accessible space coordinate points; and
determining the number of the target accessible space coordinate points.

In some implementations, the step of acquiring accessible space information for the unoccupied parking space; includes:
receiving different data packets containing base location coordinate points and coordinate offsets respectively from an around view monitor; where the coordinate offsets are coordinate differences between the accessible space coordinate points and the base location coordinate points; and
extracting the base location coordinate points and the coordinate offsets respectively from the data packets to generate coordinates of the plurality of accessible space coordinate points, where the plurality of accessible space coordinate points are usable to form accessible space information.

In some implementations, the data packets contain location tags, and the step of extracting the base location coordinate points and the coordinate offsets respectively from the data packets to generate coordinates of the plurality of accessible space coordinate points includes:
extracting the base location coordinate points and the coordinate offsets respectively from target data packets, where the target data packets are data packets containing the same location tags; and
generating the coordinates of the plurality of accessible space coordinate points based on the base location coordinate points and the coordinate offsets.

The present disclosure further provides a parking space detection apparatus, including:
an acquisition module, configured to acquire ambient images on both sides of a vehicle;
an unoccupied parking space identification module, configured to identify an unoccupied parking space based on the ambient images;
an accessible space information acquisition module, configured to acquire accessible space information for the unoccupied parking space;
a determination module, configured to determine whether there is a deployed parking lock in the unoccupied parking space based on the accessible space information; and
an available parking space determination module, configured to determine the unoccupied parking space as an available parking space if there is no deployed parking lock in the unoccupied parking space.

The present disclosure further provides a vehicle, including:
one or more processors; and
one or more machine-readable media having an instruction stored therein, where the instruction, when executed by the one or more processors, causes the vehicle to perform the one or more methods described above.

The present disclosure further provides one or more machine-readable media having an instruction stored therein, where the instruction, when executed by one or more processors, causes the processors to perform the one or more methods described above.

The present disclosure has the following advantages:
acquiring ambient images on both sides of a vehicle; identifying an unoccupied parking space based on the ambient images; acquiring accessible space information for the unoccupied parking space; determining, based on the accessible space information, whether there is a deployed parking lock in the unoccupied parking space; and if not, determining the unoccupied parking space as an available parking space. The disadvantage that a collapsed parking lock is determined as an obstacle when detected by an ultrasonic radar is avoided by detecting whether a parking lock is deployed, such that a parking space with a collapsed parking lock can be determined as an available parking space, thereby improving the efficiency of automatic parking.

### Brief Description of Drawings

The above and/or additional aspects and advantages of the present disclosure will become apparent and easily understood from the following description in combination with the accompanying drawings below, where:
Fig. 1 is a schematic diagram of detecting parking locks by using an ultrasonic radar in the prior art.
Fig. 2 is a flowchart illustrating steps of a parking space detection method according to an implementation of the present disclosure.
Fig. 3 is a flowchart illustrating steps of another parking space detection method according to an implementation of the present disclosure.
Fig. 4 is a schematic diagram showing distribution of accessible space coordinate points when there is no deployed parking lock in an unoccupied parking space of the present disclosure.
Fig. 5 is a schematic diagram showing distribution of accessible space coordinate points when there is a deployed parking lock in an unoccupied parking space of the present disclosure.
Fig. 6 is a structural block diagram of a parking space detection apparatus according to an implementation of the present disclosure.
Fig. 7 schematically illustrates a block diagram of a computer processing device for performing the method according to the present disclosure.
Fig. 8 schematically illustrates a storage unit for holding or carrying a program code for implementing the method according to the present disclosure.

### Detailed Description

The implementations of the present disclosure will be described in detail below, and examples of the implementations are shown in the accompanying drawings, in which the same or similar reference numerals denote the same or similar elements or elements having the same or similar functions. The implementations described below by reference to the accompanying drawings are exemplary and are merely intended to explain the present disclosure and are not to be construed as limiting the present disclosure.

Referring to Fig. 2, a flowchart illustrating steps of a parking space detection method according to an implementation of the present disclosure is shown, and the method may specifically include the following steps:
Step 201: acquiring ambient images on both sides of a vehicle.
   Specifically, the vehicle is equipped with an around view monitor (AVM), and the AVM may acquire real-time images around the vehicle through a plurality of cameras arranged in different directions of the vehicle. When parking, parking spaces are generally located on both sides of a travel route of the vehicle, so the ambient images on both sides of the vehicle can be acquired by the AVM
Step 202: acquiring accessible space information for an unoccupied parking space.
   An accessible space of the unoccupied parking space refers to an area free from obstacles in the unoccupied parking space. Accessible space detection is performed on the unoccupied parking space to acquire the accessible space information for the unoccupied parking space.
Step 203: determining, based on the accessible space information, whether there is a deployed parking lock in the unoccupied parking space.
   A deployed parking lock in the unoccupied parking space may be determined as an obstacle after accessible space detection, i.e., the accessible space does not cover an area in which the deployed parking lock is located. However, when the parking lock is collapsed, the collapsed parking lock is basically flush with the ground during the accessible space detection, so the parking lock will not be determined as an obstacle, i.e., the accessible space includes the area in which the collapsed parking lock is located. Therefore, it can be determined whether there is a deployed parking lock in the unoccupied parking space based on the accessible space information.
Step 204: if not, determining the unoccupied parking space as an available parking space.
   When it is determined that there is no deployed parking lock in the unoccupied parking space, the unoccupied parking space may be determined as an available parking space, and the vehicle may be parked into the available parking space through automatic parking. It should be noted that when an automatic parking function is enabled, the vehicle may also use an ultrasonic radar to detect parking spaces. However, because the ultrasonic radar cannot distinguish whether a parking lock is deployed or collapsed, the ultrasonic radar will always determine a parking lock in the parking space as an obstacle. Therefore, when an unoccupied parking space is determined as an available parking space, even if the ultrasonic radar detects that there is a stable ultrasonic echo in the middle front of the parking space, i.e., there may be a parking lock, the automatic parking function will be executed normally to park the vehicle into the available parking space.

In the present disclosure, the method includes: acquiring ambient images on both sides of a vehicle; identifying an unoccupied parking space based on the ambient images; acquiring accessible space information for the unoccupied parking space; determining, based on the accessible space information, whether there is a deployed parking lock in the unoccupied parking space; and if not, determining the unoccupied parking space as an available parking space. The disadvantage that a collapsed parking lock is determined as an obstacle when detected by an ultrasonic radar is avoided by detecting whether a parking lock is deployed, such that a parking space with a collapsed parking lock can be determined as an available parking space, thereby improving the efficiency of automatic parking.

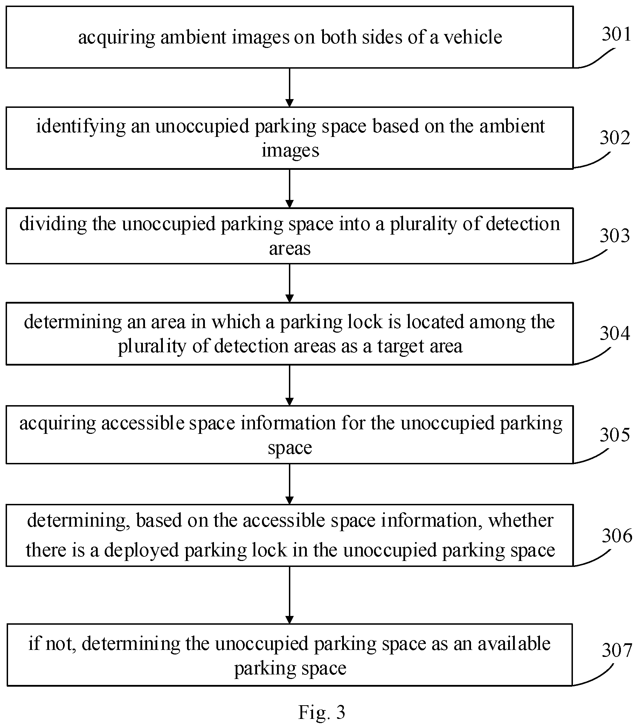

Referring to Fig. 3, a flowchart illustrating steps of another parking space detection method according to an implementation of the present disclosure is shown, and the method may specifically include the following steps:
Step 301: acquiring ambient images on both sides of a vehicle.
   Because Step 301 is similar to Step 201 in the previous implementation, specific description may be referred to step 201 in the previous implementation, and is not repeated here.
Step 302: identifying an unoccupied parking space based on the ambient images.
   In one implementation of the present disclosure, the step of identifying an unoccupied parking space based on the ambient images further includes the following sub-steps:
   detecting parking space boundaries and parking space corner points in the ambient images; and
   determining a plurality of unoccupied parking spaces in the ambient images based on the parking space boundaries and the parking space corner points.
   For a parking lot, parking spaces are generally rectangular areas enclosed by white lines or yellow lines, which are obviously different from the general ground. Therefore, captured ambient images may be detected to obtain parking space boundaries and parking space corner points in the ambient images. When a vehicle is parked in a parking space, the parking space boundaries and parking space corner points will be partially obscured in the captured ambient images due to the obstruction of the vehicle. Therefore, a location defined by complete parking space boundaries and complete four parking space corner points acquired in the ambient images may be determined as an unoccupied parking space, i.e., a parking space without a vehicle parked therein. It should be noted that, the judgment is made on whether there is a vehicle in the parking space, but not on whether there is a small obstacle in the parking space, such as a deployed parking lock.
Step 303: dividing the unoccupied parking space into a plurality of detection areas.
   Specifically, because a parking lock is generally arranged at a fixed position in a parking space, the unoccupied parking space may be divided into a plurality of detection areas in order to facilitate the judgment of whether there is a deployed parking lock in the unoccupied parking space. For example, the unoccupied parking space may be divided into 6 rectangular areas of equal length and width. It should be noted that the number, area, length and width of the divided detection areas may be set based on specific needs of those skilled in the art, which is not limited in the present disclosure.
Step 304: determining an area in which a parking lock is located among the plurality of detection areas as a target area.
   In general, since a parking lock is fixedly arranged in the middle front of a parking space, the detection area after division in the middle front of the parking space may be taken as the target area. In addition, because the vehicle is also equipped with an ultrasonic radar, the ultrasonic radar can identify the location of the parking lock, the vehicle can also identify through the ultrasonic radar that there is a stable ultrasonic echo in the middle front of the parking space, i.e., there may be a parking lock, and the area is determined as the target area.
Step 305: acquiring accessible space information for the unoccupied parking space.
   In one implementation of the present disclosure, the step of acquiring accessible space information for the unoccupied parking space further includes the following sub-steps:
   receiving different data packets containing base location coordinate points and coordinate offsets respectively from an around view monitor; where the coordinate offsets are coordinate differences between the accessible space coordinate points and the base location coordinate points; and
   extracting the base location coordinate points and the coordinate offsets respectively from the data packets to generate coordinates of the plurality of accessible space coordinate points, where the plurality of accessible space coordinate points are usable to form accessible space information.
   Specifically, after acquiring the ambient images, the AVM processes the ambient images to obtain the accessible space information of the unoccupied parking space. The accessible space information consists of a plurality of accessible space coordinate points, which can be regarded as coordinates of a location that can be eventually reached by walking in a straight line from one end of the unoccupied parking space close to the vehicle to the other end of the unoccupied parking space. Due to a low capacity of a data transmission channel of a controller area network (CAN) of the vehicle, base location coordinate points can be determined in the ambient images, and a certain number of accessible space coordinate points can be selected from the accessible space information. For example, in order to reduce data transmission pressure, 6 accessible space coordinate points may be selected to determine coordinate differences between the base location coordinate points and the 6 accessible space coordinate points, i.e., the coordinate offsets, respectively. The AVM controller encapsulates coordinates of the base location coordinate points into one data packet, and the coordinate offsets into another data packet, and sends the data packets to the vehicle at the same time. The vehicle extracts the base location coordinate points and the coordinate offsets from the data packets, and combines them one by one to restore and generate the coordinates of the 6 accessible space coordinate points. It should be noted that the number of the accessible space coordinate points may be selected according to user needs and actual conditions, which is not limited in the present disclosure.

In another implementation of the present disclosure, the data packets contain location tags, and the step of extracting the base location coordinate points and the coordinate offsets respectively from the data packets to generate coordinates of the plurality of accessible space coordinate points further includes the following sub-steps:
extracting the base location coordinate points and the coordinate offsets respectively from target data packets, where the target data packets are data packets containing the same location tags; and
generating the coordinates of the plurality of accessible space coordinate points based on the base location coordinate points and the coordinate offsets.

Specifically, the AVM can also add location tags to the data packets while encapsulating the base location coordinate points and the coordinate offsets into data packets, and the location tag added to the data packet in which the base location coordinate points belonging to the same ambient image is located is the same as the location tag added to the data packet in which the corresponding coordinate offsets are located. After receiving the data packets, the vehicle can combine the base location coordinate points and the coordinate offsets in the data packets containing the same location tag based on the location tags to obtain the coordinates of the accessible space coordinate points.

Step 306: determining, based on the accessible space information, whether there is a deployed parking lock in the unoccupied parking space.

In one implementation of the present disclosure, the accessible space information includes accessible space coordinate points, and the step of determining, based on the accessible space information, whether there is a deployed parking lock in the unoccupied parking space further includes the following sub-steps:
determining, based on coordinates of the accessible space coordinate points, the number of accessible space coordinate points falling into the target area;
determining whether the number exceeds a preset threshold;
if so, determining that there is a deployed parking lock in the unoccupied parking space;
if not, determining, based on the coordinates of the accessible space coordinate points, whether the accessible space coordinate points fall behind the unoccupied parking space and are located in an area outside the parking space boundaries; and
determining that there is no deployed parking lock in the unoccupied parking space if the accessible space coordinate points fall behind the unoccupied parking space and are located in the area outside the parking space boundaries.

Because the accessible space coordinate points can be regarded as coordinates of a location that can be eventually reached by walking in a straight line from one end of the unoccupied parking space close to the vehicle to the other end of the unoccupied parking space, when there is a deployed parking lock in the unoccupied parking space, one cannot continue to move when walking in a straight line to a location at which the parking lock is located due to obstruction of the parking lock, and then the final accessible location is the area in which the parking lock is located. Accordingly, the number of accessible space coordinate points falling in the area in which the parking lock is located can be determined based on the coordinates of the plurality of accessible space coordinate points, and after the determination, the number can be compared with a preset threshold. If the number exceeds the preset threshold, it can be considered that a plurality of accessible space coordinate points are located in the area in which the parking lock is located, and that the parking lock is deployed. If the number does not exceed the preset threshold, it can also be determined whether the coordinates of the accessible space coordinate points fall behind the unoccupied parking space and are located in an area outside the parking space boundaries. When all the accessible space coordinate points fall behind the unoccupied parking space and are located in the area outside the parking space boundaries, it can be determined that there is no deployed parking lock in the unoccupied parking space.

In another implementation of the present disclosure, the step of determining, based on coordinates of the accessible space coordinate points, the number of accessible space coordinate points falling into the target area further includes the following sub-steps:
determining a coordinate range of the target area;
inspecting the accessible space coordinate points;
determining whether the coordinates of the accessible space coordinate points fall within the coordinate range;
if so, determining the accessible space coordinate points falling into the target area as target accessible space coordinate points; and
determining the number of the target accessible space coordinate points.

Specifically, a range of the target area may be expressed by the coordinate range, and the generated plurality of accessible space coordinate points are inspected to determine one by one whether the coordinates of the accessible space coordinate points fall within the coordinate range of the target area. The accessible space coordinate points corresponding to the coordinates falling within the coordinate range of the target area are determined as the accessible space coordinate points falling into the target area, and the number of the accessible space coordinate points falling into the target area is counted.

Step 307: if not, determining the unoccupied parking space as an available parking space.

When it is determined that there is no deployed parking lock in the unoccupied parking space, it can be determined that the vehicle can be parked into the unoccupied parking space which can be determined as an available parking space, and the user can park the vehicle into the available parking space through the automatic parking function. In addition, before the vehicle is parked into the available parking space, ambient images captured by a rearview camera of the vehicle may be provided to the user through a vehicle-mounted display screen, and the user can check the actual situation of the parking space through the ambient images to decide whether to park the vehicle into the parking space.

In the present disclosure, the amount of data transmitted is reduced and the data transmission pressure is reduced by acquiring ambient images on both sides of a vehicle; identifying an unoccupied parking space based on the ambient images; dividing the unoccupied parking space into a plurality of detection areas; determining an area in which a parking lock is located among the plurality of detection areas as a target area; receiving different data packets containing base location coordinate points and coordinate offsets respectively from an around view monitor; extracting the base location coordinate points and the coordinate offsets respectively from the data packets to generate coordinates of a plurality of accessible space coordinate points, where the accessible space coordinate points are usable to form accessible space information; determining, based on the accessible space information, whether there is a deployed parking lock in the unoccupied parking space; and if not, determining the unoccupied parking space as an available parking space, such that a parking space with a collapsed parking lock can be determined as an available parking space, thereby improving the efficiency of automatic parking.

In order to facilitate further understanding of the present disclosure by those skilled in the art, the present disclosure will be described below by examples of specific scenarios.

When the user drives the vehicle into a parking lot for parking, the user enables the automatic parking function, and ambient images on both sides of the vehicle are captured by a plurality of cameras equipped at different positions of the vehicle while the vehicle travels at a low speed.

The vehicle identifies a plurality of unoccupied parking spaces in the parking lot based on the captured ambient images and travels to the nearest unoccupied parking space. After approaching the unoccupied parking space, the vehicle divides the unoccupied parking space into 6 detection areas of equal length and width, and presets the detection area in the middle and near the vehicle side as a target area in which the parking lock is located.

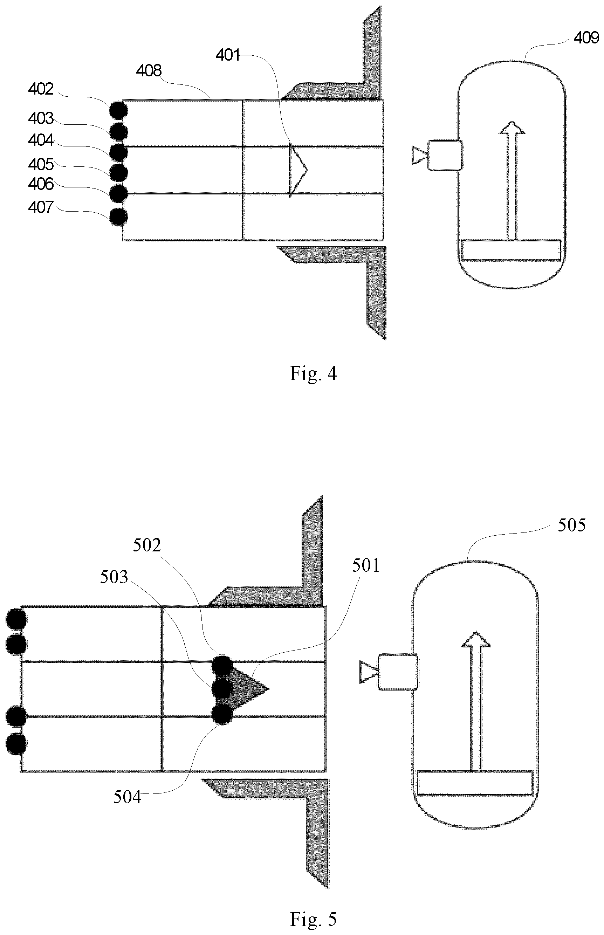

The vehicle performs accessible space detection on the unoccupied parking space to obtain 6 accessible space coordinate points, and determines whether the number of accessible space coordinate points falling into the target area among the 6 accessible space coordinate points exceeds the preset threshold 2. When the number of the accessible space coordinate points falling into the target area does not exceed 2, the vehicle determines whether the 6 accessible space coordinate points fall at the end of the unoccupied parking space far from the vehicle and are located in an area outside the parking space boundaries. If so, it is considered that there is no deployed parking lock in the unoccupied parking space. As shown in Fig. 4, a schematic diagram showing distribution of accessible space coordinate points when there is no deployed parking lock in an unoccupied parking space. A parking lock 401 is collapsed. As a result, accessible space coordinate points 402-407 all fall at the end of an unoccupied parking space 408 away from a vehicle 409. After it is determined that there is no deployed parking lock in the unoccupied parking space, the unoccupied parking space is determined as an available parking space, and the vehicle can be parked into the available parking space through an automatic parking function.

However, when there is a deployed parking lock in the unoccupied parking space, as shown in Fig. 5, a parking lock 501 is deployed, it is determined that accessible space coordinate points 502, 503 and 504 fall into a target area, the number of which exceeds the preset threshold 2. Therefore, it is determined that the parking lock is deployed, the unoccupied parking space is an unavailable parking space, and a vehicle 505 gives up the parking space and continues to look for another unoccupied parking space.

In the implementation of the present disclosure, the method includes: acquiring ambient images on both sides of a vehicle; identifying an unoccupied parking space based on the ambient images; acquiring accessible space coordinate points for the unoccupied parking space; determining, based on the number of the accessible space coordinate points falling into a target area, whether there is a deployed parking lock in the unoccupied parking space; and if not, determining the unoccupied parking space as an available parking space. The disadvantage that a collapsed parking lock is determined as an obstacle when detected by an ultrasonic radar is avoided by detecting whether a parking lock is deployed, such that a parking space with a collapsed parking lock can be determined as an available parking space, thereby improving the efficiency of automatic parking.

It should be noted that, for the sake of simple description, method implementations are all expressed as a series of action combinations, but a person skilled in the art should know that the implementations of the present disclosure are not limited by the described sequence of actions, since some steps may be performed in other sequences or simultaneously according to the implementations of the present disclosure. A person skilled in the art should also know that all the implementations described in the specification are optional implementations, and that involved actions are not necessarily required by the present disclosure.

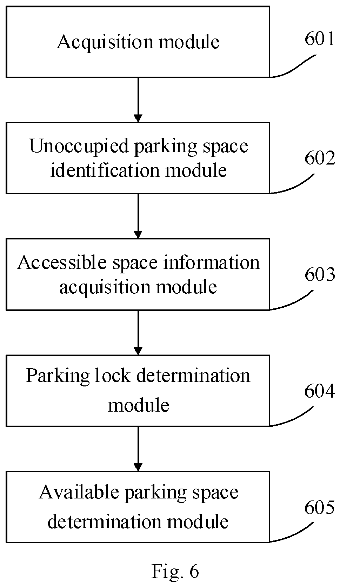

Referring to Fig. 6, a structural block diagram of a parking space detection apparatus according to an implementation of the present disclosure is shown, and the parking space detection apparatus may specifically include the following modules:
an acquisition module 601, configured to acquire ambient images on both sides of a vehicle;
an unoccupied parking space identification module 602, configured to identify an unoccupied parking space based on the ambient images;
an accessible space information acquisition module 603, configured to acquire accessible space information for the unoccupied parking space;
a parking lock determination module 604, configured to determine whether there is a deployed parking lock in the unoccupied parking space based on the accessible space information; and
an available parking space determination module 605, configured to determine the unoccupied parking space as an available parking space if there is no deployed parking lock in the unoccupied parking space.

In one implementation of the present disclosure, the unoccupied parking space identification module 602 includes:
a parking space boundary and parking space corner point detection submodule, configured to detect parking space boundaries and parking space corner points in the ambient images; and
an unoccupied parking space determining submodule, configured to determine a plurality of unoccupied parking spaces in the ambient images based on the parking space boundaries and the parking space corner points.

In one implementation of the present disclosure, the apparatus further includes:
a detection area dividing module, configured to divide the unoccupied parking space into a plurality of detection areas; and
a target area determination module, configured to determine an area in which the parking lock is located among the plurality of detection areas as a target area.

In one implementation of the present disclosure, the accessible space information includes accessible space coordinate points, and the parking lock determination module 604 includes:
an accessible space coordinate point number determining submodule, configured to determine the number of accessible space coordinate points falling into the target area based on coordinates of the accessible space coordinate points;
a number determining submodule, configured to determine whether the number exceeds a preset threshold;
a first parking lock status determining submodule, configured to determine that there is a deployed parking lock in the unoccupied parking space if the number exceeds the preset threshold;
an accessible space coordinate point determining submodule, configured to determine whether the accessible space coordinate points fall behind the unoccupied parking space and are located in an area outside the parking space boundaries based on the coordinates of the accessible space coordinate points; and
a second parking lock status determining submodule, configured to determine that there is no deployed parking lock in the unoccupied parking space if the accessible space coordinate points fall behind the unoccupied parking space and are located in the area outside the parking space boundaries.

In one implementation of the present disclosure, the accessible space coordinate point number determining submodule further includes:
a coordinate range determining unit, configured to determine a coordinate range of the target area;
an inspecting unit, configured to inspect the accessible space coordinate points;
a determining unit, configured to determine whether the coordinates of the accessible space coordinate points fall within the coordinate range;
a target accessible space coordinate point determining unit, configured to determine the accessible space coordinate points falling into the target area as target accessible space coordinate points if the coordinates of the accessible space coordinate points fall within the coordinate range; and
a number determining unit, configured to determine the number of the target accessible space coordinate points.

In one implementation of the present disclosure, the accessible space information acquisition module 603 further includes:
a data packet receiving submodule, configured to receive different data packets containing base location coordinate points and coordinate offsets respectively from an around view monitor; where the coordinate offsets are coordinate differences between the accessible space coordinate points and the base location coordinate points; and
an accessible space coordinate point generation submodule, configured to extract the base location coordinate points and the coordinate offsets respectively from the data packets to generate coordinates of the plurality of accessible space coordinate points, where the plurality of accessible space coordinate points are usable to form accessible space information.

In one implementation of the present disclosure, the data packets contain location tags, and the accessible space coordinate point generation submodule further includes:
an extraction unit, configured to extract the base location coordinate points and the coordinate offsets respectively from target data packets, where the target data packets are data packets containing the same location tags; and
a generation unit, configured to generate the coordinates of the plurality of accessible space coordinate points based on the base location coordinate points and the coordinate offsets.

Because the apparatus implementations are basically similar to the method implementations, the description is relatively simple. Refer to the description of the method implementations for relevant content.

The present disclosure further provides a vehicle, including:
one or more processors; and
one or more machine-readable media having an instruction stored therein, where the instruction, when executed by the one or more processors, causes the vehicle to perform the one or more methods described above.

The present disclosure further provides one or more machine-readable media having an instruction stored therein, where the instruction, when executed by one or more processors, causes the processors to perform the one or more methods described above.

Components in the present disclosure may be implemented in hardware, or a software module running on one or more processors, or any combination thereof. It should be understood by those skilled in the art that a microprocessor or digital signal processor (DSP) may be used in practice to achieve some or all of functions of some or all of components in the computer processing device according to the present disclosure. The present disclosure may also be implemented as a device or apparatus program (e.g., a computer program and a computer program product) for performing some or all of the methods described herein. Such a program for implementing the present disclosure may be stored in a computer-readable medium, or may take the form of one or more signals. Such a signal can be downloaded from an Internet site, or provided on a carrier signal, or in any other form.

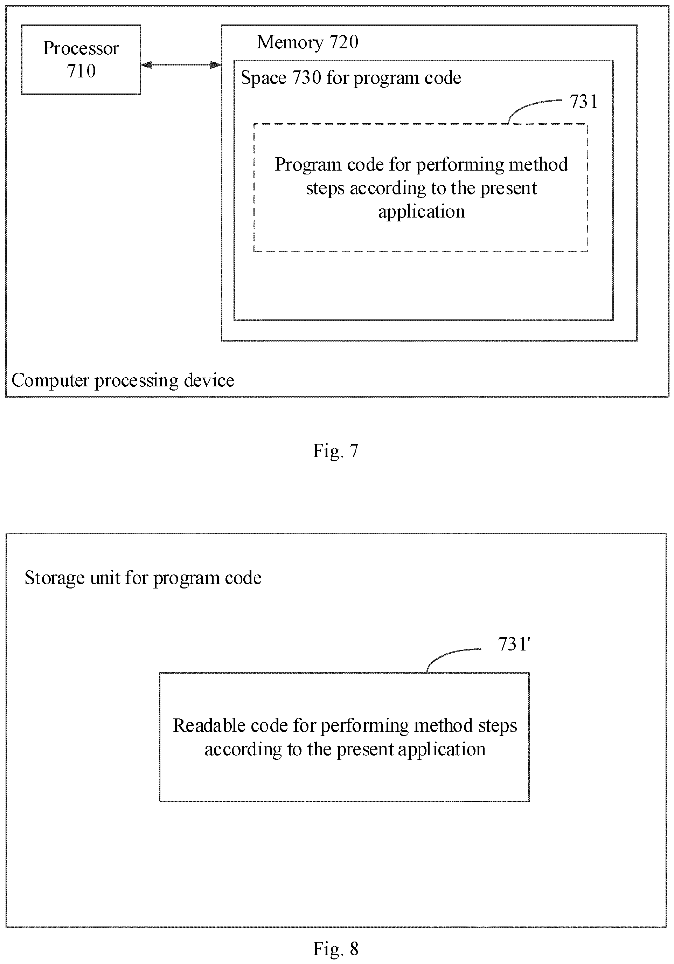

For example, Fig. 7 illustrates a computer processing device capable of implementing the method according to the present disclosure. The computer processing device conventionally includes a processor 710 and a computer program product or computer-readable medium in the form of a memory 720. The memory 720 may be an electronic memory such as flash memory, EEPROM, EPROM, hard disk or ROM. The memory 720 has a storage space 730 for program codes 731 for executing any one of the method steps in the above method. For example, the storage space 730 for program codes may include the program codes 731 for implementing various steps in the above method respectively. These program codes may be read from or written into one or more computer program products. These computer program products include program code carriers such as hard disk, compact disk (CD), memory card or floppy disk. Such a computer program product is typically a portable or fixed storage unit as described with reference to Fig. 8. The storage unit may have a storage segment or storage space arranged in a manner similar to the memory 720 of the computer processing device shown in Fig. 8. The program codes may, for example, be compressed in an appropriate form. The storage unit typically includes computer-readable codes 731', i.e., codes that can be read by a processor such as 710, these codes, when run by the computer processing device, cause the computer processing device to perform various steps in the method described above.

The above embodiments merely express several implementations of the present disclosure, but should not be construed as limitations to the scope of patent rights of the present disclosure despite of specific and detailed description. It should be noted that those skilled in the art can make various changes and improvements without departing from the concept of the present disclosure, which should be incorporated in the protection scope of the present disclosure. Therefore, the protection scope of patent rights of the present disclosure shall be subjected to appended claims.

## Claims

1. A parking space detection method, comprising:
acquiring ambient images on both sides of a vehicle;
identifying an unoccupied parking space based on the ambient images;
acquiring accessible space information for the unoccupied parking space;
determining, based on the accessible space information, whether there is a deployed parking lock in the unoccupied parking space; and
if not, determining the unoccupied parking space as an available parking space.

2. The method according to claim 1, wherein the step of identifying an unoccupied parking space based on the ambient images comprises:
detecting parking space boundaries and parking space corner points in the ambient images; and
determining a plurality of unoccupied parking spaces in the ambient images based on the parking space boundaries and the parking space corner points.

3. The method according to claim 2, wherein after the step of determining a plurality of unoccupied parking spaces in the ambient images based on the parking space boundaries and the parking space corner points, the method further comprises:
dividing the unoccupied parking space into a plurality of detection areas; and
determining an area in which a parking lock is located among the plurality of detection areas as a target area.

4. The method according to claim 3, wherein the accessible space information comprises accessible space coordinate points, and the step of determining, based on the accessible space information, whether there is a deployed parking lock in the unoccupied parking space comprises:
determining, based on coordinates of the accessible space coordinate points, the number of accessible space coordinate points falling into the target area;
determining whether the number exceeds a preset threshold;
if so, determining that there is a deployed parking lock in the unoccupied parking space;
if not, determining, based on the coordinates of the accessible space coordinate points, whether the accessible space coordinate points fall behind the unoccupied parking space and are located in an area outside the parking space boundaries; and
determining that there is no deployed parking lock in the unoccupied parking space if the accessible space coordinate points fall behind the unoccupied parking space and are located in the area outside the parking space boundaries.

5. The method according to claim 4, wherein the step of determining, based on coordinates of the accessible space coordinate points, the number of accessible space coordinate points falling into the target area comprises:
determining a coordinate range of the target area;
inspecting the accessible space coordinate points;
determining whether the coordinates of the accessible space coordinate points fall within the coordinate range;
if so, determining the accessible space coordinate points falling into the target area as target accessible space coordinate points; and
determining the number of the target accessible space coordinate points.

6. The method according to claim 4, wherein the step of acquiring accessible space information for the unoccupied parking space comprises:
receiving different data packets containing base location coordinate points and coordinate offsets respectively from an around view monitor, wherein the coordinate offsets are coordinate differences between the accessible space coordinate points and the base location coordinate points; and
extracting the base location coordinate points and the coordinate offsets respectively from the data packets to generate coordinates of the plurality of accessible space coordinate points, wherein the plurality of accessible space coordinate points are usable to form accessible space information.

7. The method according to claim 6, wherein the data packets comprise location tags, and the step of extracting the base location coordinate points and the coordinate offsets respectively from the data packets to generate coordinates of the plurality of accessible space coordinate points comprises:
extracting the base location coordinate points and the coordinate offsets respectively from target data packets, the target data packets being data packets containing the same location tags; and
generating the coordinates of the plurality of accessible space coordinate points based on the base location coordinate points and the coordinate offsets.

8. A parking space detection apparatus, comprising:
an acquisition module, configured to acquire ambient images on both sides of a vehicle;
an unoccupied parking space identification module, configured to identify an unoccupied parking space based on the ambient images;
an accessible space information acquisition module, configured to acquire accessible space information for the unoccupied parking space;
a parking lock determination module, configured to determine whether there is a deployed parking lock in the unoccupied parking space based on the accessible space information; and
an available parking space determination module, configured to determine the unoccupied parking space as an available parking space if there is no deployed parking lock in the unoccupied parking space.

9. A vehicle, comprising:
one or more processors; and
one or more machine-readable media having instructions stored thereon which, when executed by the one or more processors, cause the vehicle to perform the one or more methods according to any one of claims 1 to 7.

10. A computer-readable medium having instructions stored thereon which, when executed by one or more processors, cause the processors to perform the one or more methods according to any one of claims 1 to 7.
